# EUROPÄISCHE PATENTSCHRIFT

(11) **EP 2 563 630 B1**
(45) Veröffentlichungstag und Bekanntmachung des Hinweises auf die Patenterteilung: **29.06.2016**
(21) Anmeldenummer: 11715529.1
(22) Anmeldetag: 19.04.2011
(51) Int. Cl.: B60T 8/40, B60T 13/74

(54) **BREMSANLAGE FÜR KRAFTFAHRZEUGE**
BRAKING SYSTEM FOR MOTOR VEHICLES
SYSTÈME DE FREINAGE POUR VÉHICULES AUTOMOBILES

(30) Priorität: 14.04.2011 DE 102011007353; 30.04.2010 DE 102010028399
(43) Veröffentlichungstag der Anmeldung: 06.03.2013
(73) Patentinhaber: Continental Teves AG & Co. oHG, 60488 Frankfurt (DE)
(72) Erfinder: FEIGEL, Hans-Jörg, 61191 Rosbach (DE)
(86) Internationale Anmeldenummer: PCT/EP2011/056209
(87) Internationale Veröffentlichungsnummer: WO 2011/134841

(56) Entgegenhaltungen:
- WO-A1-2004/005095
- WO-A1-2006/111392
- WO-A1-2008/122468
- DE-A1-102006 030 168
- JP-A- 2008 260 351

## Beschreibung

Die Erfindung betrifft eine Bremsanlage für Kraftfahrzeuge gemäß Oberbegriff von Anspruch 1.

In der DE 10 2006 030 168 A1 wird ein elektrisch betätigter Bremsverstärker beschrieben. Im Falle einer Bremspedalbetätigung wird ein Antriebskolben durch den Eingabeschub (Pedaltrittkraft) vorwärtsbewegt und dann durch Ansteuerung eines elektrischen Motors ein Verstärkerkolben vorwärts bewegt, so dass sich der Antriebskolben und der Verstärkerkolben zusammen vorwärtsbewegen. Dadurch wird in der Druckkammer eines Masterzylinders ein hydraulischer Druck erzeugt, der dem Eingabeschub, welcher mittels des Bremspedals auf den Antriebskolben aufgebracht wird, und dem Verstärkerschub, der mittels des elektrischen Motors auf den Verstärkerkolben aufgebracht wird, entspricht.

In der Kraftfahrzeugtechnik finden "Brake-by-wire"-Bremssysteme eine immer größere Verbreitung. Bei diesen Bremssystemen kann die Bremse einerseits ohne aktives Zutun des Fahrzeugführers aufgrund elektronischer Signale "fremd"-betätigt werden. Diese elektronischen Signale können beispielsweise von einem elektronischen Stabilitätsprogramm ESC oder einem Abstandsregelsystem ACC ausgegeben werden. Andererseits kann auf eine Betätigung des Bremssystems ganz oder teilweise verzichtet werden, wenn eine vom Fahrzeugführer über eine Bremspedalbetätigungskraft angeforderte Bremswirkung beispielsweise durch Umschalten eines elektrischen Fahrzeugantriebs in einen Generatorbetrieb erzielt wird. In beiden Fällen entspricht der Betätigungszustand der Bremse nicht der vom Fahrzeugführer angeforderten Bremswirkung.

Aus der WO 2006/111392 A1 ist eine Bremsanlage mit einem Bremspedal, welches mit einer Wegsimulatorfeder in Wirkverbindung ist, und einer elektromotorischen Antriebsvorrichtung bekannt, wobei die Antriebsvorrichtung einen Elektromotor und ein Getriebe umfasst und einen Kolben eines Kolbenzylinder-Systems verstellt, so dass sich in dem Arbeitsraum des Zylinders, welcher über eine Druckleitung mit einer Radbremse in Verbindung ist, ein Druck einstellt. Der Elektromotor bzw. das Getriebe der Antriebsvorrichtung ist dabei parallel zu dem Kolben des Kolbenzylinder-Systems angeordnet, d.h. die Antriebsvorrichtung ist um das Kolbenzylinder-System herum angeordnet. Dies bewirkt eine kurze Baulänge der Kolben-Motoreinheit, jedoch wird die entsprechende aufwändige Ausbildung des Getriebes, z.B. die speziell gestaltete Zahnstange des Getriebes, als nachteilig empfunden.
Der vorliegenden Erfindung liegt die Aufgabe zugrunde, eine alternative Bremsanlage mit einfacherem Aufbau bereitzustellen.

Diese Aufgabe wird erfindungsgemäß durch eine Bremsanlage gemäß Anspruch 1 gelöst.

Der Erfindung liegt der Gedanke zugrunde, dass die elektromechanische Antriebsvorrichtung zwischen dem Bremspedal und dem Hauptbremszylinder sowie zwischen dem Bremspedal und dem Wegsimulator angeordnet ist, und dass sich das erste mechanische Verbindungsmittel von dem Bremspedal durch die Antriebsvorrichtung hindurch zu dem Wegsimulator erstreckt.

Ein Vorteil der erfindungsgemäßen Bremsanlage ist der einfache Aufbau bei dennoch kompakter Bauweise. So ist durch die Hintereinanderanordnung von Antriebsvorrichtung und Hauptbremszylinder eine wenig aufwändige Ausführung der zweiten mechanischen Verbindung zwischen Antriebsvorrichtung und Hauptbremszylinder möglich. Ein weiterer Vorteil liegt darin, dass eine Führung des ersten mechanische Verbindungsmittels in der Antriebsvorrichtung einfach realisierbar ist.

Bevorzugt ist die Bremsanlage in einer "Brake-by-wire"-Betriebsart sowohl vom Fahrzeugführer als auch unabhängig vom Fahrzeugführer ansteuerbar, vorzugsweise wird die Bremsanlage in der "Brake-by-wire"-Betriebsart betrieben und kann in einer Rückfallbetriebsart betrieben werden, in der nur der Betrieb durch den Fahrzeugführer möglich ist.

Die erfindungsgemäße Bremsanlage umfasst einen Wegsimulator, welcher über ein Betätigungskräfte übertragendes erstes mechanisches Verbindungsmittel mit dem Bremspedal gekoppelt ist. Der Wegsimulator vermittelt dem Fahrzeugführer in einer Betriebsart "Brake-by-Wire" ein angenehmes Bremspedalgefühl und umfasst vorteilhafterweise zumindest ein elastisches Element. Besonders bevorzugt ist die Wirkung des Wegsimulators abschaltbar, insbesondere in einer Rückfallbetriebsart.

Bevorzugt ist eines der mechanischen Verbindungsmittel zumindest teilweise als ein Hohlkörper ausgebildet und das andere mechanische Verbindungsmittel erstreckt sich zumindest teilweise durch diesen Hohlkörper. Hierdurch wird eine mechanische Führung des anderen Verbindungsmittels erreicht. Außerdem kann die Relativbewegung der beiden Verbindungsmittel so einfach gemessen und überwacht werden. Besonders bevorzugt ist das zweite mechanische Verbindungsmittel zumindest teilweise hohl ausgebildet und das erste mechanische Verbindungsmittel verläuft zumindest teilweise innerhalb des zweiten mechanischen Verbindungsmittels.

Bevorzugt umfasst der Wegsimulator zumindest eine Kolben-Zylinder-Anordnung, deren Simulatorkolben mit dem ersten mechanischen Verbindungsmittel verbunden ist. Der Simulatorkolben wird vorteilhafterweise in dem Zylinder der Kolben-Zylinder-Anordnung verlagerbar geführt und wirkt mit einem elastischen Element zusammen, welches dem Fahrer ein angenehmes Bremspedalgefühl vermittelt. Besonders bevorzugt umfasst der Wegsimulator zumindest eine hydraulische Kolben-Zylinder-Anordnung mit einem hydraulischen Raum.

Gemäß einer besonders vorteilhaften Weiterbildung der Erfindung ist der hydraulische Raum des Wegsimulators mit zumindest einer Radbremse, z.B. über den Hauptbremszylinder und/oder über ein Ventil, verbunden oder verbindbar. Der Wegsimulator kann so als Fülleinrichtung zur Vorbefüllung der Radbremsen dienen.

Vorteilhafterweise umfasst der Wegsimulator zumindest eine hydraulische Kolben-Zylinder-Anordnung mit einem hydraulischen Raum, wobei der hydraulische Raum über ein elektrisch steuerbares, z.B. stromlos offenes, Ventil mit einem Druckmittelbehälter verbunden ist. Durch Schließen und Öffnen des Ventils ist der Wegsimulator ab- und zuschaltbar.

Der Wegsimulator umfasst bevorzugt zusätzlich zu dem Simulatorkolben einen weiteren Kolben und eine Feder, wobei der Simulatorkolben eine kleinere Kolbenwirkfläche als der weitere Kolben besitzt in dem weitere Kolben verlagerbar geführt wird und sich mittels der Feder an dem weitere Kolben abstützt. Hierdurch wird eine Springerfunktion bei Bremspedalbetätigung erzielt.

Um Rückwirkungen auf das Bremspedal bei einer Anti-Blockierregelung verhindern zu können, ist zwischen dem hydraulischem Raum des Wegsimulators und der Radbremse bevorzugt ein elektrisch steuerbares, stromlos offenes Trennventil angeordnet.

Gemäß einer anderen vorteilhaften Weiterbildung der Erfindung ist der hydraulische Raum des Wegsimulators über ein Rückschlagventil mit dem Hauptbremszylinder und damit mit einer Radbremse verbunden.

Gemäß einer Weiterbildung der erfindungsgemäßen Bremsanlage sind der Wegsimulator und der Hauptbremszylinder im wesentlichen parallel nebeneinander angeordnet und zumindest das erste oder das zweite mechanische Verbindungsmittel umfasst ein Kraftumlenkmittel. Hierdurch wird eine kurze Baulänge erzielt.

Gemäß einer bevorzugten Ausführungsform der Bremsanlage ist die Kolben-Zylinder-Anordnung des Wegsimulators koaxial zu dem ersten mechanischen Verbindungsmittel, und besonders bevorzugt koaxial zu der Antriebsvorrichtung, angeordnet und das zweite mechanische Verbindungsmittel umfasst ein Kraftumlenkmittel.

Gemäß einer anderen bevorzugten Ausführungsform ist der Hauptbremszylinder koaxial zu dem zweiten mechanischen Verbindungsmittel, und besonders bevorzugt koaxial zu der Antriebsvorrichtung, angeordnet und das erste mechanische Verbindungsmittel umfasst ein Kraftumlenkmittel.

Der Wegsimulator umfasst bevorzugt zwei Kolben-Zylinder-Anordnungen, deren Simulatorkolben gemeinsam durch das erste mechanische Verbindungsmittel betätigbar sind. Die beiden Kolben-Zylinder-Anordnungen sind vorteilhafterweise symmetrisch und jeweils parallel zu dem Hauptbremszylinder angeordnet.

Die elektromechanische Antriebsvorrichtung umfasst bevorzugt einen Elektromotor und eine Getriebevorrichtung, wobei die Getriebevorrichtung mit dem zweiten mechanischen Verbindungsmittel in Wirkverbindung steht. Besonders bevorzugt ist die Getriebevorrichtung als Kugelgewindetrieb ausgebildet.

Gemäß einer Weiterbildung der erfindungsgemäßen Bremsanlage sind das erste und das zweite mechanische Verbindungsmittel derart ausgebildet, dass eine Betätigung des Hauptbremszylinders in Bremsbetätigungsrichtung mittels des ersten mechanische Verbindungsmittels durch einen mechanischen Kontakt zwischen dem ersten mechanischen Verbindungsmittel und dem Hauptbremszylinders oder durch einen mechanischen Kontakt zwischen dem ersten mechanischen Verbindungsmittel und dem zweitem mechanischen Verbindungsmittel möglich ist. Hierdurch wird eine Bremsbetätigung durch den Fahrzeugführer in der Rückfallbetriebsart möglich, wenn z.B. die Energieversorgung der Antriebsvorrichtung ausgefallen ist. In der "Brake-by-wire"-Betriebsart soll der mechanische Kontakt zwischen erstem mechanischen Verbindungsmittel und Hauptbremszylinder bzw. zweitem mechanischen Verbindungsmittel vorteilhafterweise verhindert werden, um eine Rückwirkung auf das Bremspedal zu verhindern. Im unbetätigten Zustand der Bremsanlage besteht daher vorteilhafterweise eine vorgegebene mechanische Lücke zwischen erstem mechanischen Verbindungsmittel und Hauptbremszylinder bzw. zweitem mechanischen Verbindungsmittel. Das erste mechanische Verbindungsmittel tritt erst nach Überwindung dieses vorgegebenen Abstandes (Lücke) mit dem Hauptbremszylinder bzw. zweiten mechanischen Verbindungsmittel in mechanische Verbindung.

Die erfindungsgemäße Bremsanlage umfasst bevorzugt zumindest eine Sensorvorrichtung, mittels welcher die relative Lage von erstem zu zweitem mechanischen Verbindungsmittels bestimmt wird. Hierdurch kann ein unbeabsichtigter mechanischer Kontakt zwischen erstem mechanischen Verbindungsmittel und Hauptbremszylinder bzw. zweitem mechanischen Verbindungsmittel erkannt werden und gegebenenfalls Maßnahmen zur Verhinderung des Kontakts eingeleitet werden.

Um, z.B. bei einem Bremsdruckabbau bei einer Anti-Blockierregelung, einen mechanischen Kontakt zwischen dem ersten mechanischen Verbindungsmittel und dem Hauptbremszylinder bzw. zwischen dem ersten mechanischen Verbindungsmittel und dem zweiten mechanischen Verbindungsmittel zu verhindern, ist vorteilhafterweise der Druckraum des Hauptbremszylinders über ein elektrisch steuerbares Ventil mit einem Druckmittelbehälter verbindbar, so dass in vorgegebenen Situationen einen Ablassen von Bremsflüssigkeit aus dem Hauptbremszylinders in den Druckmittelbehälter möglich ist.

Bevorzugt ist der Kolben des Hauptbremszylinders mittels des ersten mechanischen Verbindungsmittels auch dann betätigbar, wenn die Antriebsvorrichtung blockiert ist. Hierzu ist besonders bevorzugt das zweite mechanische Verbindungsmittel zweiteilig ausgebildet. Alternativ ist es besonders bevorzugt, dass die Kopplung zwischen dem Kolben des Hauptbremszylinders und dem zweitem mechanischem Verbindungmittel lösbar ausgeführt ist.

Das erste mechanische Verbindungsmittel sowie das zweite mechanische Verbindungsmittel sind vorteilhafterweise derart ausgebildet und angeordnet, dass das zweite mechanische Verbindungsmittel durch die Antriebsvorrichtung über einen vorgegebenen Weg in Bremsbetätigungsrichtung relativ zu dem ersten mechanische Verbindungsmittel verstellt werden kann, ohne dass eine Mitnahme oder Rückwirkung auf das Bremspedal erfolgt. Hierzu ist z.B. in dem als Hohlkörper ausgeführten mechanischen Verbindungsmittel eine Öffnung vorgesehen.

Zur Bremsdruckmodulation sind in den Bremsleitungen zu den Radbremsen bevorzugt elektrisch steuerbare, stromlos offene Ventile angeordnet. Eine Bremsdruckmodulation wird mit Hilfe der Antriebsvorrichtung im Multiplexverfahren durchgeführt.

Für einen beschleunigten Bremsdruckabbau in einer Radbremse ist besonders bevorzugt eine Radbremse oder ein Radbremskreis über ein elektrisch steuerbares, stromlos geschlossenes Ventil mit einem Druckmittelbehälter verbindbar.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer erfindungsgemäßen Bremsanlage,
- Fig. 2: ein zweites Ausführungsbeispiel einer erfindungsgemäßen Bremsanlage,
- Fig. 3: ein dritten Ausführungsbeispiel einer erfindungsgemäßen Bremsanlage,
- Fig. 4: ein vierten Ausführungsbeispiel einer erfindungsgemäßen Bremsanlage,
- Fig. 5: ein fünftes Ausführungsbeispiel einer erfindungsgemäßen Bremsanlage,
- Fig. 6: ein sechstes Ausführungsbeispiel einer erfindungsgemäßen Bremsanlage,
- Fig. 7: ein siebtes Ausführungsbeispiel einer erfindungsgemäßen Bremsanlage,
- Fig. 8: einen Ausschnitt eines achten Ausführungsbeispiels einer erfindungsgemäßen Bremsanlage,
- Fig. 9: ein neuntes Ausführungsbeispiel einer erfindungsgemäßen Bremsanlage, und
- Fig. 10: ein zehntes Ausführungsbeispiel einer erfindungsgemäßen Bremsanlage.

Sich entsprechende Komponenten sind in allen Figuren mit den gleichen Bezugszeichen versehen.

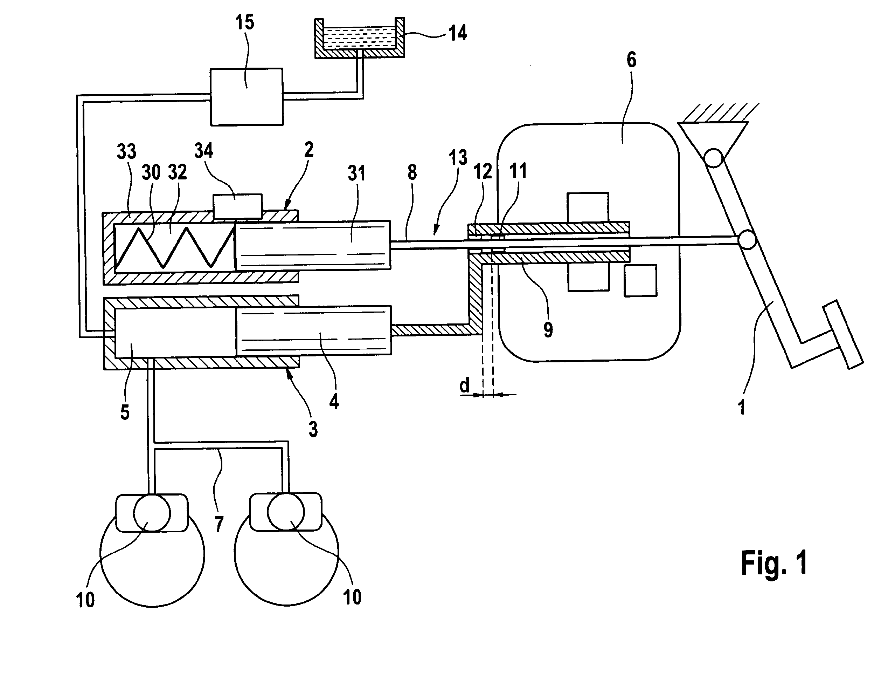

In Fig. 1 ist ein erstes Ausführungsbeispiel einer erfindungsgemäßen Bremsanlage schematisch dargestellt. Die Bremsanlage umfasst ein Bremspedal 1, welches über ein Betätigungskräfte übertragendes erstes mechanisches Verbindungsmittel 8 mit einem Pedalgefühlsimulator (Wegsimulator) 2 gekoppelt ist. Beispielsgemäß ist die erste mechanische Verbindung 8 als eine Druckstange ausgeführt, welche das Bremspedal 1 mit dem Wegsimulator 2 verbindet. Der Pedalgefühlsimulator 2 umfasst mindestens ein elastisches Element, beispielsgemäß eine Feder 30, und soll dem Fahrer ein angenehmes Bremspedalgefühl vermitteln. Des Weiteren umfasst die Bremsanlage einen Hauptbremszylinder 3, in dem mindestens ein Druckkolben 4 verlagerbar geführt ist, wobei der Kolben 4 mit dem Hauptbremszylinder 3 eine Druckkammer 5 zur Erzeugung eines hydraulischen Bremsdruckes begrenzt. Druckraum 5 des Hauptbremszylinders 3 ist mittels Bremsleitung 7 mit hydraulisch betätigbaren Radbremsen 10 verbunden. Weiterhin umfasst die Bremsanlage eine elektrisch steuerbare Antriebsvorrichtung 6 zur Erzeugung einer Fremdkraft zur Betätigung der Radbremsen 10. Hierzu ist Druckkolben 4 über ein zweites mechanisches Verbindungsmittel 9 von dem elektromechanischen Fremdkraftaktuator 6 betätigbar. Über die zweite mechanische Verbindung 9 kann Aktuator 6 eine Kraft auf den Druckkolben 4 ausüben zur Betätigung des Hauptbremszylinders 3. Aktuator 6 ist nach Maßgabe einer Bremspedalbetätigung ansteuerbar.

Antriebsvorrichtung 6 ist zwischen dem Bremspedal 1 und dem Hauptbremszylinder 3 und zwischen dem Bremspedal 1 und dem Wegsimulator 2 angeordnet. Entsprechend sind Bremspedal 1 einerseits und Wegsimulator 2 und Hauptbremszylinder 3 andererseits auf gegenüberliegenden Seiten des Aktuators 6 angeordnet. Die erste mechanische Verbindung 8 verläuft entsprechend durch den Aktuator 6 hindurch.

Wegsimulator 2 umfasst beispielsgemäß eine Kolben-Zylinder-Anordnung, deren Simulatorkolben 31 in Zylinder 33 verlagerbar geführt ist. Simulatorkolben 31 und Zylinder 33 begrenzen einen Raum 32, in welchem Feder 30 angeordnet ist, über welche sich Simulatorkolben 31 an Zylinder 33 abstützt. Simulatorkolben 31 ist mit dem ersten mechanischen Verbindungsmittel 8 fest verbunden.

Wegsimulator 2 und Hauptbremszylinder 3 sind von einander beabstandet, im Wesentlichen achsparallel nebeneinander angeordnet. Dabei ist beispielsgemäß Pedalgefühlsimulator 2 koaxial zur ersten mechanischen Verbindung 8, welche gerade ausgebildet ist (z.B. als Druckstange), angeordnet (axiale Ausrichtung von erstem mechanischen Verbindungsmittel 8 und Wegsimulator 2). Das zweite mechanische Verbindungsmittel 9 umfasst eine Kraftumlenkung, um die von Antriebsvorrichtung 6 aufgebrachte Kraft auf den radial zum Wegsimulator 2 versetzt angeordneten Hauptbremszylinder 3 übertragen zu können.

Das zweite mechanische Verbindungsmittel 9 ist in einem Bereich in und nahe dem Aktuator 6 als Hohlkörper ausgeführt, z.B. als zylindrische Hülse, und das erste mechanische Verbindungsmittel 8 ist stückweise innerhalb des Hohlkörpers angeordnet. Die zweite mechanische Verbindung 9 besitzt, z.B. im Bereich der Kraftumlenkung, einen Öffnungsbereich in Richtung des Wegsimulators 2, an welchem die erste mechanische Verbindung 8 aus dem Inneren des Hohlkörpers heraustritt.

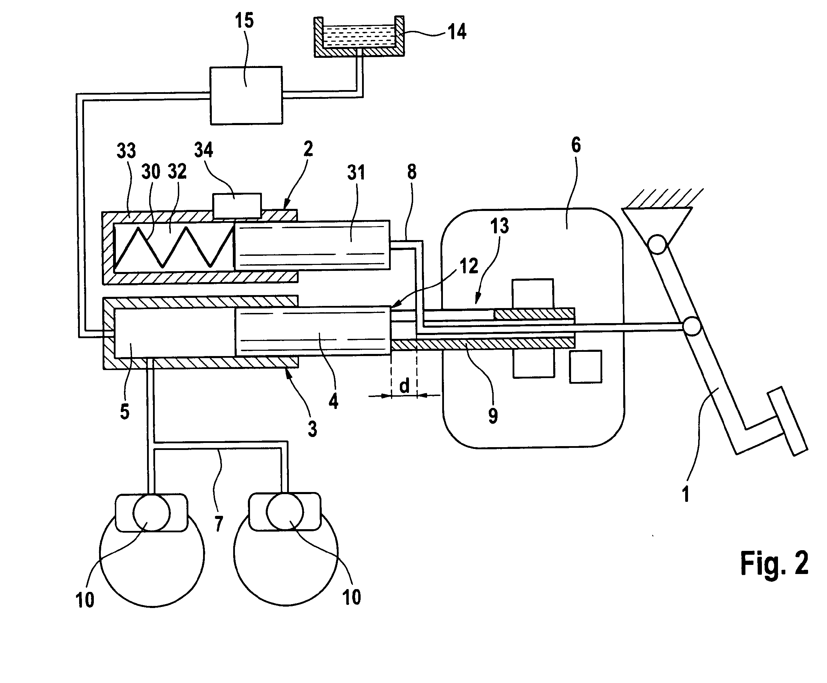

In Fig. 2 ist ein zweites Ausführungsbeispiel einer erfindungsgemäßen Bremsanlage schematisch dargestellt. Die Bremsanlage umfasst wie das erste Ausführungsbeispiel ein Bremspedal 1, welches über eine erste mechanische Verbindung 8 mit einem Wegsimulator 2 gekoppelt ist, einen Hauptbremszylinder 3 mit Kolben 4 und Druckkammer 5, an welchen Radbremsen 10 angeschlossen sind, sowie eine elektrisch steuerbare Antriebsvorrichtung (Aktuator) 6, welche über eine zweite mechanische Verbindung 9 mit dem Druckkolben 4 koppelbar oder gekoppelt ist. Bremspedal 1 einerseits und Wegsimulator 2 und Hauptbremszylinder 3 andererseits sind auf gegenüberliegenden Seiten des Aktuators 6 angeordnet, wobei Wegsimulator 2 und Hauptbremszylinder 3 nebeneinander angeordnet sind. Die erste mechanische Verbindung 8 erstreckt sich durch Aktuator 6.

Gemäß dem zweiten Ausführungsbeispiel ist das zweite mechanische Verbindungsmittel 9 im Wesentlichen als zylindrischer Hohlkörper ausgeführt und Hauptbremszylinder 3 ist koaxial zu dem zweiten mechanischen Verbindungsmittel 9 angeordnet (axiale Ausrichtung von zweitem mechanischen Verbindungsmittel 9 und Hauptbremszylinder 3). Die erste mechanische Verbindung 8 umfasst eine Kraftumlenkung, um die Bremspedalbetätigung auf den radial zum Hauptbremszylinder 3 versetzt angeordneten Wegsimulator 2 übertragen zu können.
Die erste mechanische Verbindung 8 verläuft zumindest teilweise innerhalb des Hohlkörpers des zweiten Verbindungsmittels 9. Verbindungsmittel 9 besitzt einen Öffnungsbereich senkrecht zur Richtung der Hauptbremszylinderachse/ zweiten mechanischen Verbindung, in welchem die erste mechanische Verbindung 8 aus dem Inneren des Hohlkörpers heraustritt.

Sowohl im ersten als auch im zweiten Ausführungsbeispiel sind die erste 8 und die zweite 9 mechanische Verbindung derart ausgebildet, dass bei einer Verschiebung der ersten mechanischen Verbindung 8 relativ zur zweiten mechanischen Verbindung 9 (in Richtung einer Bremsbetätigung), welche ein vorgegebenes Maß erreicht (Abstand d ist überwunden), die erste mechanische Verbindung 8 mechanisch in Eingriff mit der zweiten mechanischen Verbindung 9 oder dem Kolben 4 gelangt, so dass die von einer Bremspedalbetätigung auf die erste mechanische Verbindung 8 wirkende Kraft auf den Hauptbremszylinder 3 übertragen wird. Hierdurch kann, wenn z.B. eine Betätigung des Hauptbremszylinders 3 durch den Fremdkraftaktuator 6 wegen eines Ausfalls der Energieversorgung des Fremdkraftaktuators 6 nicht möglich ist, in einer Betriebsart der Bremsanlage (sogenannte mechanische Rückfallbetriebsart) ein Durchgriff einer Bremspedalbetätigung auf den Hauptbremszylinder 3 stattfinden.

Beispielsgemäß ist hierzu gemäß dem ersten Ausführungsbeispiel (Fig. 1) an dem ersten mechanischen Verbindungsmittel 8 eine Ausformung 11 angeordnet, welche mit einem an dem zweiten mechanischen Verbindungsmittel 9 angeordneten Anschlag 12 in Eingriff gelangen kann, so dass die Betätigungskraft von der ersten mechanischen Verbindung 8 auf die zweite mechanische Verbindung 9 und so auf den Hauptbremszylinder 3 übertragen wird.
Gemäß dem in Fig. 2 dargestellten zweiten Ausführungsbeispiel kann die erste mechanische Verbindung 8 im Bereich der Kraftumlenkung (bei Erreichen des Endes der Öffnung in der zweiten mechanischen Verbindung 9) in Kontakt mit dem Druckkolben 4 kommen, d.h. Kolben 4 bildet einen Anschlag 12 für die Verbindung 8. Entsprechend kann die Betätigungskraft in der mechanischen Rückfallbetriebsart von der ersten mechanischen Verbindung 8 direkt auf den Hauptbremszylinder 3 übertragen werden.

Gemäß dem ersten und dem zweiten Ausführungsbeispiel ist die zweite mechanische Verbindung 9 im Bereich des Aktuators 6 fest mit diesem verbunden, d.h. im Falle eines Blockierens des Aktuators 6 wird die zweite mechanische Verbindung 9 durch Aktuator 6 an einer Bewegung gehindert.

Damit auch im Falle eines blockierten Aktuators 6 die auf das Bremspedal 1 wirkende Kraft in der Rückfallebene über die erste mechanische Verbindung 8 auf den Hauptbremszylinder 3 übertragen werden kann, ist die zweite mechanische Verbindung 9 gemäß dem ersten Ausführungsbeispiel (Fig. 1) zweiteilig ausgebildet. Der erste Teil der zweiten mechanischen Verbindung 9, welcher fest mit dem Aktuator 6 verbunden ist, wird durch den Aktuator 6 an einer Bewegung gehindert, wohingegen der zweite Teil der zweiten mechanischen Verbindung 9, welcher fest mit Kolben 4 verbunden ist, über die Ausformung 11 der ersten mechanische Verbindung 8 in Richtung des Hauptbremszylinders 3 bewegt werden kann. Die zweite mechanische Verbindung 9 ist beispielsgemäß im Bereich des Anschlags 12 zweigeteilt. Der Anschlag 12 ist auf dem zweiten Teil der zweiten mechanischen Verbindung 9 angeordnet.

Um in der Rückfallbetriebsart bei blockiertem Aktuator 6 eine Übertragung der Bremspedalkraft über die erste mechanische Verbindung 8 auf den Hauptbremszylinder 3 zu ermöglichen, ist gemäß dem in Fig. 2 dargestellten zweiten Ausführungsbeispiel die zweite mechanische Verbindung 9 einteilig ausgebildet und fest mit Aktuator 6 verbunden, jedoch nicht fest mit Kolben 4 verbunden. Entsprechend kann Kolben 4 durch die erste mechanische Verbindung 8 in Bremsbetätigungsrichtung betätigt werden, wobei sich Kolben 4 von Verbindung 9 entfernt.
Gemäß den Ausführungsbeispielen (z.B. Fig. 1 und 2) ist die Druckkammer 5 des Hauptbremszylinders 3 über ein elektrisch steuerbares, z.B. stromlos geschlossenes, Auslassventil 15 mit einem Druckmittelbehälter 14 verbindbar. Druckmittelbehälter 14 besitzt ein niedriges Druckniveau und ist z.B. als ein Niederdruckspeicher oder ein Druckmittelvorratsbehälter (Atmosphärendruck) ausgeführt. Die Wirkungsweise des Auslassventils 15 wird weiter unten erläutert.

Die Funktionsweise der erfindungsgemäßen Bremsanlage wird im Folgenden anhand der in Fig. 1 und 2 gezeigten Ausführungsbeispiele näher erläutert. Bei einer Bremsung in der Betriebsart "Brake-by-Wire" führt die Betätigung des Bremspedals 1 zu einer Bewegung der ersten mechanischen Verbindung 8 und zur Verschiebung des Simulatorkolbens 31 des Wegsimulators 2. Die Bremspedalbetätigung wird durch einen Sensor (nicht dargestellt) erfasst. Der elektromechanische Aktuator 6 wird nach Maßgabe der erfassten Bremspedalbetätigung angesteuert und betätigt so über die zweite mechanische Verbindung 9 den Druckkolben 4 entsprechend der Bremspedalbetätigung, was zu einem Bremsdruckaufbau in den Radbremsen 10 führt. Geht der Fahrer vom Bremspedal 1, so bewegt sich die erste mechanische Verbindung 8 und der Kolben 31 des Pedalgefühlsimulators 2 entgegen der Bremsbetätigungsrichtung. Aktuator 6 wird entsprechend angesteuert, so dass Druckkolben 4 zurückweichen kann (entgegen der Bremsbetätigungsrichtung) und der Bremsdruck in den Radbremsen 10 entsprechend der Bremspedalbetätigung abgebaut wird. Bei einer ähnlichen Verschiebung von erstem 8 und zweitem 9 mechanischen Verbindungsmittel kommt es somit zu keinem Kontakt an Anschlag 12.

Auch wenn das Bremspedal 1 nicht betätigt wird, kann der Hauptzylinder 3 über die zweite mechanische Verbindung 9 von Aktuator 6 betätigt werden. Dies ist z.B. im Falle eines aktiven Bremseingriffes durch ein Fahrdynamikregelfunktion oder eine Abstandsregelfunktion notwendig. Um in diesem Fall eine Rückwirkung auf das Bremspedal 1 zu unterbinden, sind die erste 8 und die zweite 9 mechanische Verbindung, z.B. bezüglich Längen und relativer Anordnung von Kraftumlenkung, Öffnungsbereich etc., derart ausgebildet, dass eine Verschiebung der zweiten mechanischen Verbindung 9 (in Bremsbetätigungsrichtung) relativ zu der ersten mechanischen Verbindung 8 über eine vorbestimmte Länge 13 möglich ist, ohne dass es zu einer kraftübertragenden Verbindung (einem Anschlag) und damit zu einer Rückwirkung auf das Bremspedal 1 kommt.

Gemäß dem in Fig. 1 dargestellten ersten Ausführungsbeispiel kann die zweite mechanischen Verbindung 9 über die Länge 13 in Bremsbetätigungsrichtung bewegt werden, bevor die zweite mechanischen Verbindung 9 im Öffnungsbereich mit dem Simulatorkolben 31 des Wegsimulators 2 in Kontakt kommt und bei einer weitere Bewegung eine Mitnahme des Simulatorkolbens 31 bewirkt, welche zu einer Rückwirkung auf das Bremspedal 1 führt.

Gemäß dem in Fig. 2 dargestellten zweiten Ausführungsbeispiel kann die zweite mechanischen Verbindung 9 über die Länge 13 in Bremsbetätigungsrichtung bewegt werden, bevor die zweite mechanischen Verbindung 9 mit dem dem Bremspedal 1 zugewandten Ende des Öffnungsbereichs mit der ersten mechanischen Verbindung 8 in Kontakt kommt. Bei einer weiteren Bewegung der zweiten mechanischen Verbindung 9 wird eine Mitnahme der ersten mechanischen Verbindung 8 in Bremsbetätigungsrichtung bewirkt, welche zu einer Mitführung des Bremspedals 1 führt.

Wenn der Bremsdruck in den Radbremsen 10, z.B. bei einer Anti-Blockierregelung, unter das Bremsdruckniveau, welches der Bremspedalbetätigung durch den Fahrer entspricht, abgebaut werden soll, wird die zweite mechanische Verbindung 9 durch den Aktuator 6 entgegen der Bremsbetätigungsrichtung bewegt. Wenn die Bremspedalbetätigung durch den Fahrer und damit die Position der ersten mechanischen Verbindung 8 unverändert bleibt, kann es zu einem Kontakt am Anschlag 12 kommen, d.h. es käme zu einer Krafteinwirkung auf die erste mechanische Verbindung 8. Eine derartige Rückwirkung wäre für den Fahrer am Bremspedal 1 spürbar und würde als störend empfunden. Um dies zu verhindern, wird vorteilhafterweise eine Annäherung des Anschlags 12 an die erste mechanische Verbindung 8, 11 anhand einer Sensorvorrichtung 34, welche die Lage/Position einer Komponente des Wegsimulators 2 (z.B. des Kolbens 31) oder die Lage/Position der ersten mechanischen Verbindung 8 erfasst, und einer Sensorvorrichtung 35, welche die Lage/Position einer Komponente des Aktuators 6, und damit der zweiten mechanischen Verbindung 9, oder des Kolbens 4 des Hauptbremszylinders 3 erfasst, erfasst und überwacht. Unterschreitet der Abstand zwischen Anschlag 12 und erster mechanischer Verbindung 8, 11 einen Schwellenwert, so wird das stromlos geschlossene Ventil 15 geöffnet und somit Druckkammer 5 des Hauptbremszylinders 3 mit Druckmittelbehälter 14 verbunden, wodurch ein Abbau des Systemdrucks, und damit ggf. in den Radbremsen 10, erzielt wird. Eine weitere Rückführung der zweiten mechanischen Verbindung 9 entgegen der Bremsbetätigungsrichtung durch den Aktuator 6 ist dann nicht mehr notwendig.

Die erfindungsgemäße Bremsanlage wird vorteilhafterweise in Kraftfahrzeugen verwendet, welche mittels Generatorbetrieb eines elektrischen Antriebsmotors abbremsbar sind (auch regeneratives Bremsen oder Rekuperationsbremsung genannt). Bei einer Rekuperationsbremsung sollen im Allgemeinen zur Erzielung einer möglichst hohen Energieausbeute der Rekuperation die Reibungsbremsen 10 nicht oder ggf. nur unterstützend betätigt werden. Entsprechend soll bei einer Rekuperationsbremsung eine Bremspedalbetätigung durch den Fahrer (d.h. eine Verschiebung der ersten mechanischen Verbindung 8, 11 in Bremsbetätigungsrichtung) nicht zu einem (signifikanten) Bremsdruckaufbau in den Radbremsen 10 führen. Bei einer Rekuperationsbremsung kann in den beispielsgemäßen Bremsanlagen daher das stromlos geschlossen Ventil 15 geöffnet und die Druckkammer 5 des Hauptbremszylinders 3 mit Druckmittelbehälter 14 verbunden werden, damit im Falle einer Betätigung des Hauptbremszylinders 3 durch das erste mechanische Verbindungsmittel (über Anschlag 12) Druckmittel in den Druckmittelbehälter 14 abfließen kann. Zusätzlich kann Aktuator 6 angesteuert werden, um über das zweite mechanische Verbindungsmittel 9 Hauptbremszylinder 3 zu betätigen. So wird ein Eingriff des ersten mechanischen Verbindungsmittels 8, 11 mit dem Anschlag 12 verhindert und dennoch kein Bremsdruck an den Radbremsen 10 aufgebaut. Eine kritische Annäherung der ersten mechanischen Verbindung 8, 11 an den Anschlag 12 kann, wie bereits oben erläutert, anhand der Sensorvorrichtungen 34, 35 erkannt werden.

Wegsimulator 2 ist vorteilhafterweise abschaltbar ausgebildet. Z.B. ist Wegsimulator 2 und seine Abschaltung derart ausgeführt, dass bei Ausfall der Bremsanlage, z.B. bei einem Stromausfall, keine oder eine geringe Verlustkraft wirksam bleibt.

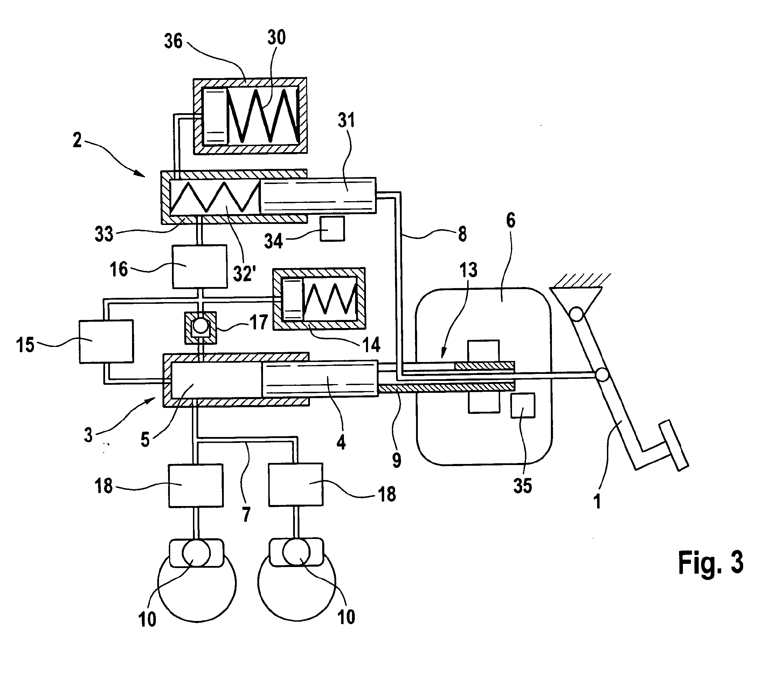

In Fig. 3 ist ein drittes Ausführungsbeispiel einer erfindungsgemäßen Bremsanlage schematisch dargestellt. Wie im zweiten Ausführungsbeispiel ist das zweite mechanische Verbindungsmittel 9 im Wesentlichen als zylindrischer Hohlkörper ausgeführt und Hauptbremszylinder 3 ist koaxial zu dem zweiten mechanischen Verbindungsmittel 9 angeordnet. Die erste mechanische Verbindung 8 umfasst eine Kraftumlenkung, um die Bremspedalbetätigung auf den radial zum Hauptbremszylinder 3 versetzt angeordneten Wegsimulator 2 übertragen zu können, und verläuft zumindest teilweise innerhalb des Hohlkörpers des zweiten Verbindungsmittels 9 und erstreckt sich durch Aktuator 6 hindurch. Im Unterschied zum zweiten Ausführungsbeispiel ist der Wegsimulator 2 gemäß dem dritten Ausführungsbeispiel hydraulisch ausgeführt. Wegsimulator 2 umfasst eine Kolben-Zylinder-Anordnung, deren Simulatorkolben 31 in Zylinder 33 verlagerbar geführt ist und welche einen hydraulischen Raum 32' umfasst. Simulatorkolben 31 ist durch das erste mechanische Verbindungsmittel 8 betätigbar und mit diesem fest verbunden. Optional umfasst Wegsimulator 2 eine weitere Simulatoranordnung 36, welche mit dem hydraulischen Raum 32' der Kolben-Zylinder-Anordnung 31, 33 hydraulisch verbunden ist.

Der hydraulische Raum 32' des Wegsimulators 2 ist über ein elektrisch steuerbares, z.B. stromlos offenes, Ventil 16 mit einem Druckmittelbehälter 14 verbindbar, um eine Abschaltung des Simulators 2 zu ermöglichen (z.B. in der Rückfallbetriebsart). Der Druckmittelbehälter 14 ist beispielsgemäß als ein Niederdruckspeicher ausgeführt, kann jedoch auch als ein Druckmittelvorratsbehälter ausgeführt sein. Zur Reduzierung der hydraulischen Komponenten der Bremsanlage sind vorteilhafterweise der hydraulische Raum 32' des Wegsimulators 2 sowie die Druckkammer 5 des Hauptbremszylinders 3 mit demselben Druckmittelbehälter 14 verbindbar, wie dies Fig. 3 zu entnehmen ist. Es kann sich jedoch auch um zwei Druckmittelbehälter handeln.

Im Normalbetrieb der Bremsanlage (Betriebsart "Brake-by-wire") ist Ventil 16 geschlossen (beispielsgemäß bestromt) und der hydraulische Raum 32' des Simulators 2 ist vom Druckmittelbehälter 14 getrennt.

Bevorzugt ist der Hauptbremszylinder 3 der Bremsanlage derart ausgelegt, dass mit einer Pedalbetätigungskraft von 500N eine Fahrzeugverzögerung von mindestens 0,5g (g: Erdbeschleunigung) erreicht werden kann.

Um, z.B. bei der oben beschriebenen Auslegung der Bremsanlage, bei kleinen Pedalwegen eine für den Fahrer wahrnehmbare Fahrzeugverzögerung zu erzielen, umfasst die Bremsanlage vorteilhafterweise eine Fülleinrichtung, mit welcher ein Vorbefüllen der Radbremsen 10 durchgeführt werden kann. Die Fülleinrichtung umfasst z.B. eine Zylinder-Kolben-Anordnung mit einem hydraulischen Raum, deren Kolben durch die erste mechanische Verbindung 8 betätigbar ist. Der hydraulische Raum der Fülleinrichtung ist mit den Radbremsen 10 oder dem Druckraum 5 des Hauptbremszylinders 3 verbunden. Mittels der Fülleinrichtung können die Radbremsen 10 bis zu einem vorgegebenen Druck befüllt werden. Der vorgegebene Druck ist z.B. durch ein Druckbegrenzungsventil oder durch die Vorspannung einer Niederdruckspeicherfeder einstellbar/vorgebbar. Bei einer Betätigung des Bremspedals 1 wird der Kolben der Fülleinrichtung durch die erste mechanische Verbindung 8 betätigt und so die Radbremsen 10 aus der Fülleinrichtung befüllt, bis ein durch das Druckbegrenzungsventil bzw. die Vorspannung der Feder des Niederdruckspeichers vorgegebener Druckwert erreicht ist.

Gemäß dem dritten Ausführungsbeispiel der Fig. 3 wird der Wegsimulator 2 bzw. dessen Zylinder-Kolben-Anordnung 31, 32', 33 als Fülleinrichtung herangezogen. Hierzu ist der hydraulische Raum 32' des Wegsimulators 2 über ein Rückschlagventil 17 mit dem Hauptbremszylinder 3 und damit den Radbremsen 10 verbunden. Die Vorspannung der Feder des Niederdruckspeichers 14 begrenzt den Fülldruck.

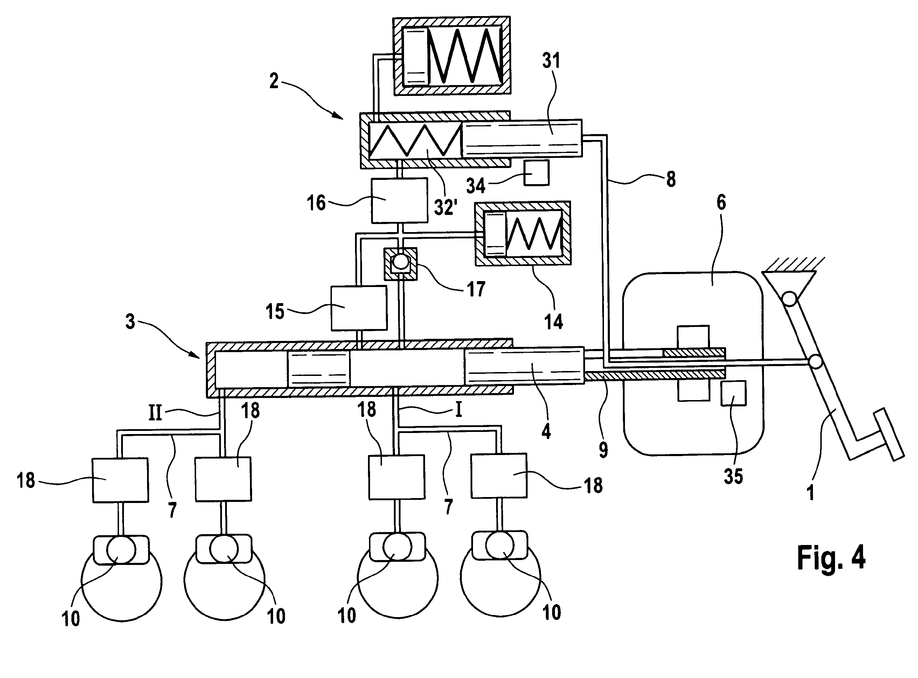

In Fig. 4 ist ein viertes Ausführungsbeispiel einer erfindungsgemäßen Bremsanlage schematisch dargestellt, in welchem der Hauptbremszylinder als ein Tandem-Hauptbremszylinder 3 (in axialer Bauweise) ausgeführt ist. Der Primärkolben 4 des Tandem-Hauptbremszylinders 3 ist über das zweite mechanische Verbindungsmittel 9 von dem elektromechanischen Fremdkraftaktuator 6 betätigbar. Beispielsgemäß sind der Primärkolbenkreis I und der Schwimmkolbenkreis II mit jeweils zwei Radbremsen 10 verbunden. Zur Bremsdruckmodulation ist in den Bremsleitungen 7 zu den Radbremsen 10 ein elektrisch steuerbares, z.B. stromlos offenes, Ventil 18 je Radbremse 10 angeordnet. Eine Bremsdruckmodulation kann mit Hilfe des (reversierenden) Aktuators 6 im Multiplexverfahren durchgeführt werden. Die übrigen Komponenten der Bremsanlage sowie deren Anordnung entsprechen im Wesentlichen denen des dritten Ausführungsbeispiels.

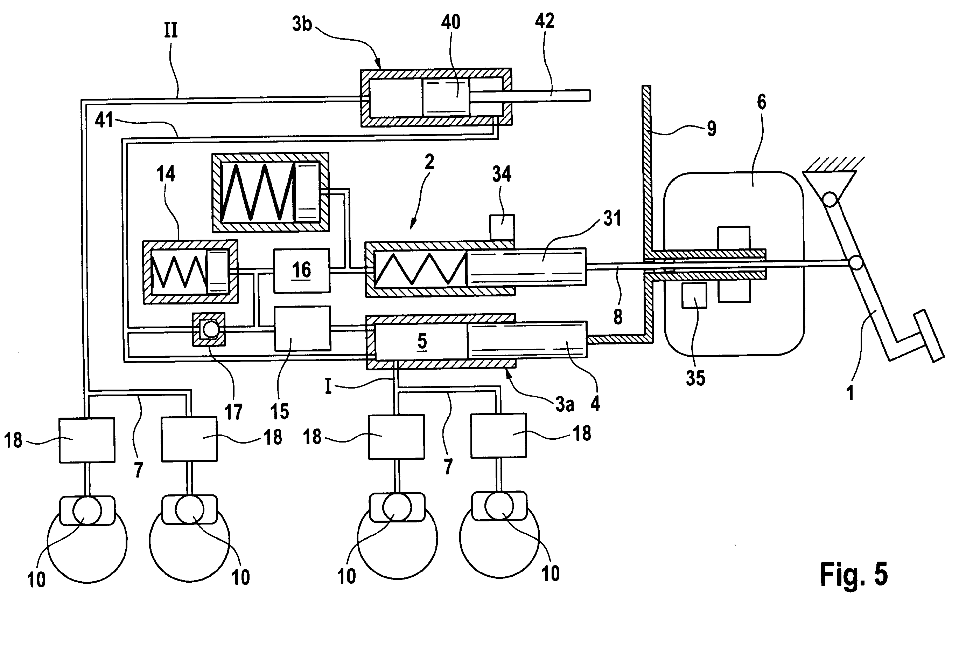

In Fig. 5 ist ein fünftes Ausführungsbeispiel einer erfindungsgemäßen Bremsanlage mit einem Tandem-Hauptbremszylinder 3a, 3b in aufgelöster Bauweise schematisch dargestellt. Wegsimulator 2 ist koaxial zum ersten mechanischen Verbindungsmittel 8 angeordnet. Der Tandem-Hauptbremszylinder 3 umfasst zwei Zylinder-Kolben-Anordnungen, wobei die Zylinder-Kolben-Anordnung 3a des Primärkolbenkreises parallel zur Zylinder-Kolben-Anordnung 3b des Schwimmkolbenkreises ausgebildet ist. Der Druckkolben 4 der Zylinder-Kolben-Anordnung 3a ist (über das mechanische Verbindungsmittel 9) mechanisch mit der Antriebsvorrichtung 6 gekoppelt und der Kolben 40 der Zylinder-Kolben-Anordnung 3b ist hydraulisch über eine Leitung 41 mit dem Kolben 4 gekoppelt. Beide Zylinder-Kolben-Anordnungen 3a, 3b sind parallel zum Wegsimulator 2 angeordnet, wobei die Zylinder-Kolben-Anordnungen 3a, 3b auf gegenüberliegenden Seiten des Wegsimulators 2 angeordnet sind. Die zweite mechanische Verbindung 9 ist vorteilhafterweise derart ausgebildet, dass auch der Kolben 40 des Schwimmkolbenkreises mechanisch mittels des zweiten mechanischen Verbindungsmittels 9 betätigt werden kann (z.B. bei einem Ausfall des Primärkolbenkreises).

Beispielsgemäß wird der Kolben 40 des Schwimmkolbenkreises erst ab einer vorgegebenen Verschiebung der zweiten mechanischen Verbindung 9 in Bremsbetätigungsrichtung betätigt. Hierzu ist eine mechanische Lücke zwischen der zweiten mechanischen Verbindung 9 und dem Druckkolben 40 des Schwimmkolbenkreises vorhanden, welche erst überwunden werden muss, bevor die zweite mechanische Verbindung 9 mit einem mit dem Druckkolben 40 verbundenen Fortsatz 42 in Eingriff gelangt.

Die übrigen Komponenten der Bremsanlage gemäß dem fünften Ausführungsbeispiel, deren Anordnung sowie Funktionsweise wurde bereits im Zusammenhang mit den Fig. 1 bis 4 erläutert.

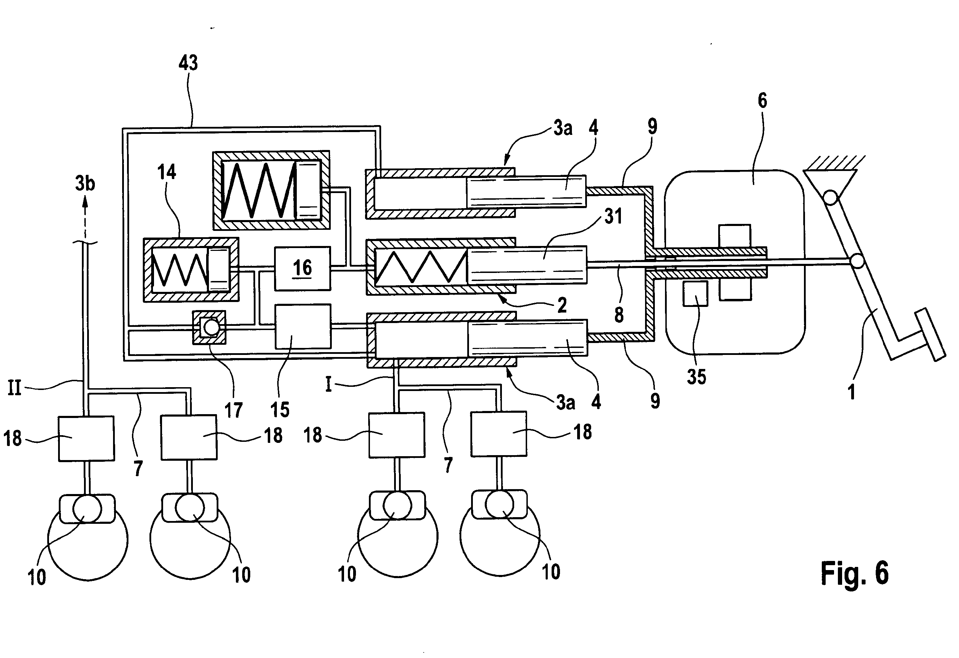

Fig. 6 zeigt ein sechstes Ausführungsbeispiel einer erfindungsgemäßen Bremsanlage. Auch hier ist der Hauptbremszylinder 3 als ein Tandem-Hauptbremszylinder in aufgelöster Bauweise ausgeführt. Im Unterschied zum fünften Ausführungsbeispiel werden der Primärkolbenkreis und der Schwimmkolbenkreis jeweils durch zwei Zylinder-Kolben-Anordnungen 3a bzw. 3b gebildet, wobei die Kolbenfläche eines Kolbens jeweils halb so groß ist wie Kolbenfläche des entsprechenden Druckkolbens je Kreis des fünften Ausführungsbeispiels. Die Druckräume der beiden Zylinder-Kolben-Anordnungen eines Kreises sind über eine hydraulische Leitung miteinander verbunden (z.B. Leitung 43 für Zylinder-Kolben-Anordnungen 3a).

Die beiden Zylinder-Kolben-Anordnungen 3a bzw. 3b eines Kreises I bzw. II sind jeweils parallel zum Wegsimulator 2, auf gegenüberliegenden Seiten des Wegsimulators 2 und symmetrisch zur Achse des ersten mechanischen Verbindungsmittels 8 angeordnet. Diese Aufteilung in zwei Zylinder-Kolben-Anordnungen (je Kreis) und deren symmetrische Anordnung erlaubt eine momentenfreie Krafteinleitung durch den Aktuator 6. Beispielsgemäß sind die beiden Kolben-Anordnungen 3b des Schwimmkolbenkreises um 90 Grad verdreht gegeneinander den beiden Kolben-Anordnungen 3a des Primärkolbenkreises angeordnet. Daher ist in Fig. 6 nur der Primärkolbenkreis (Kolben-Anordnungen 3a) dargestellt, die Kolben-Anordnungen 3b sind um 90 Grad verdreht angeordnet und der besseren Übersichtlichkeit wegen nicht dargestellt.

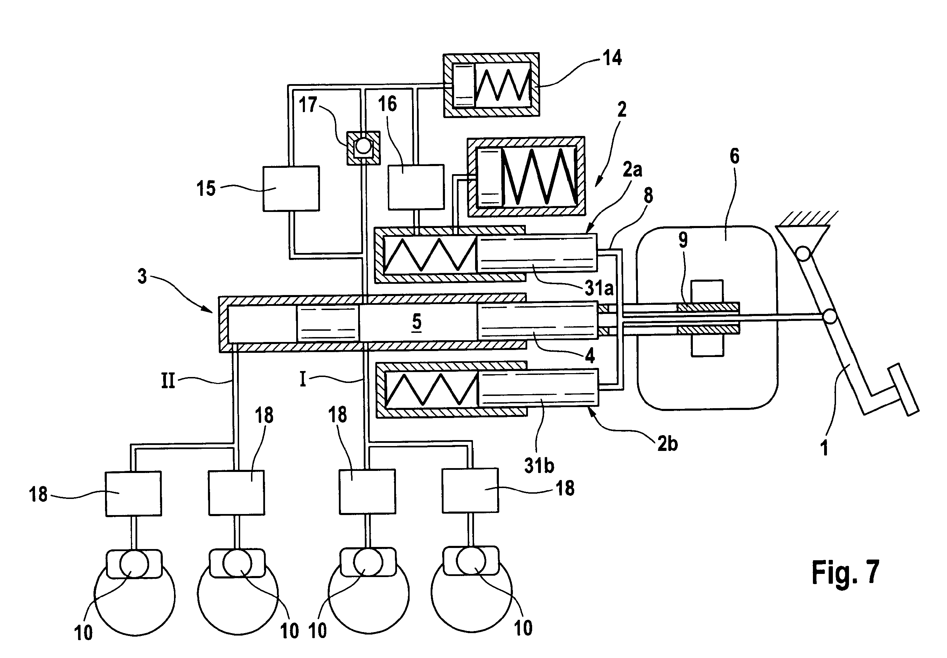

In Fig. 7 ist ein siebtes Ausführungsbeispiel einer erfindungsgemäßen Bremsanlage mit einem Tandem-Hauptbremszylinder 3 in koaxialer Anordnung zur zweiten mechanischen Verbindung 9 schematisch dargestellt. Wegsimulator 2 umfasst zwei Kolben-Zylinder-Anordnungen 2a, 2b, deren Simulatorkolben 31a, 31b gemeinsam durch das erste mechanische Verbindungsmittel 8 betätigbar sind, welches entsprechend zwei Kraftumlenkungen umfasst. Die beiden Kolben-Zylinder-Anordnungen 2a, 2b sind symmetrisch, auf gegenüberliegenden Seiten des Hauptbremszylinders 3 angeordnet. Hierdurch ist eine momentenfreie Betätigung von dem Bremspedal 1 über die erste mechanische Verbindung 8 möglich. Auch die Bremsanlage gemäß dem siebten Ausführungsbeispiel umfasst je Radbremse 10 ein, z.B. stromlos offenes, Ventil 18, welches mit Hilfe des Aktuators 6 zur Bremsdruckmodulation im Multiplexverfahren dient.

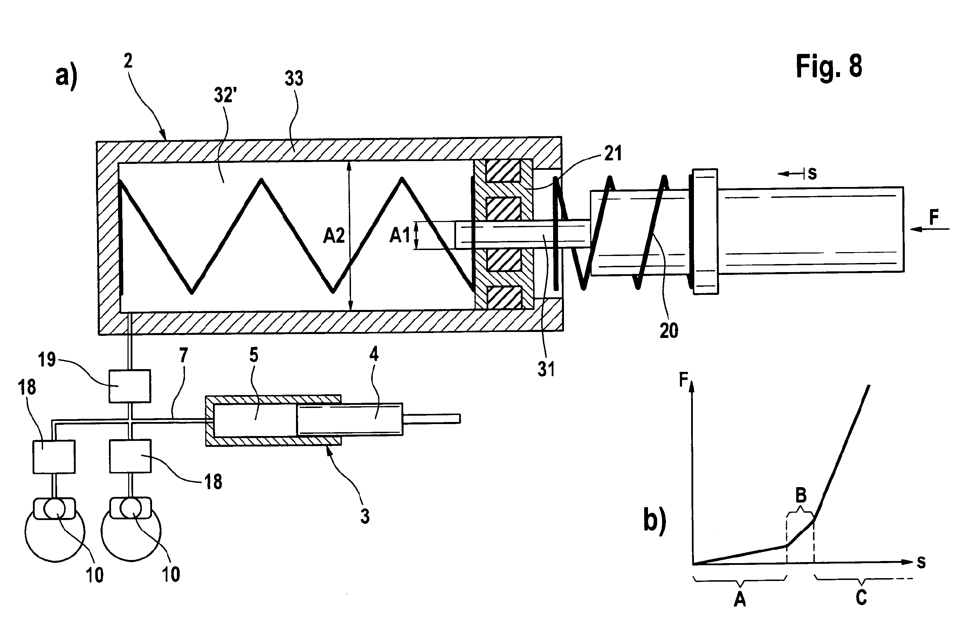

Fig. 8a) zeigt schematisch einen Ausschnitt eines achten Ausführungsbeispiels einer erfindungsgemäßen Bremsanlage. Druckraum 5 des Hauptbremszylinders 3 ist mittels Bremsleitung 7 mit hydraulisch betätigbaren Radbremsen 10 verbunden. Pedalgefühlsimulator 2 ist hydraulisch ausgeführt und umfasst eine Zylinder-Kolben-Anordnung mit einem hydraulischen Raum 32', der mit den Radbremsen 10 verbindbar ist. Beispielsgemäß ist zwischen den Radbremsen 10 (bzw. deren Einlassventilen 18) und dem hydraulischen Raum 32' ein elektrisch steuerbares, z.B. stromlos offenes, Trennventil 19 angeordnet. Durch Schließen des Trennventils 19 können Druckwechselwirkungen von den Radbremsen 10 auf den Simulator 2 / das Bremspedal 1 bei einer Bremsdruckmodulation, wie z.B. bei einer ABS- oder Fahrdynamik-Regelung (durch Verfahren des Aktuators 6), unterbunden werden. Durch Öffnen des Trennventils 19 bzw. bei geöffnetem Trennventil 19 kann das Bremspedal mittels des Fremdkraftaktuators 6 (durch Druckaufbau im Hauptbremszylinder 3) bei Bedarf rückgestellt werden.

Wie der Fig. 8a) entnommen werden kann, ist der Pedalgefühlsimulator 2 zusätzlich beispielsgemäß derart ausgeführt, dass die Druckrückwirkung (z.B. von den Radbremsen 10) in einem unteren Druckbereich reduziert wird. Hierzu umfasst der Pedalgefühlsimulator 2 zwei unterschiedliche Wirkflächen A1, A2 und optional eine Feder 20. Der hydraulische Raum 32' wird von einem ersten Kolben 21 mit Wirkfläche A1 und einem den ersten Kolben 21 durchgreifenden zweiten Kolben 31 mit kleinerer Wirkfläche A2 begrenzt, wobei Kolben 31 durch das erste mechanische Verbindungsmittel 8 betätigt wird und sich in Bremsbetätigungsrichtung über Feder 20 an Kolben 21 abstützt.

Die Funktionsweise des Pedalgefühlsimulators 2 wird im Folgenden anhand der Fig. 8 erläutert.

Bei einer Betätigung des Bremspedals 1 (mit Pedalkraft F) wirkt zunächst bei kleinen Pedalwegen s die kleinere Kolbenfläche A1 des zweiten Kolbens 31, was zu einer flachen Kraft-Weg-Kennlinie führt, wie in Fig. 8b im Bereich A dargestellt ist. Wenn Feder 20 den ersten Kolben 21 erreicht, wird zunächst die Feder 20 zusammengedrückt, was zu einer stärker ansteigenden Kraft-Weg-Kennlinie führt (Bereich B in Fig. 8b), bevor Kolben 21 mit seiner Wirkfläche A2 verschoben wird, was zu einem noch steileren Anstieg in der Kraft-Weg-Kennlinie führt (Bereich C in Fig. 8b).

Die Wirkflächen A1, A2 des Wegsimulators 2 sind mit dem Druck der Radbremsen 10 beaufschlagbar und durch den Aufbau des Simulators 2 (zwei versetzt wirksam werdende Kolbenflächen A1, A2 unterschiedlicher Größe, langsamer Übergang durch Feder 20) wird die Druckrückwirkung in einem unteren Druckbereich reduziert (sogenannte Springerfunktion).

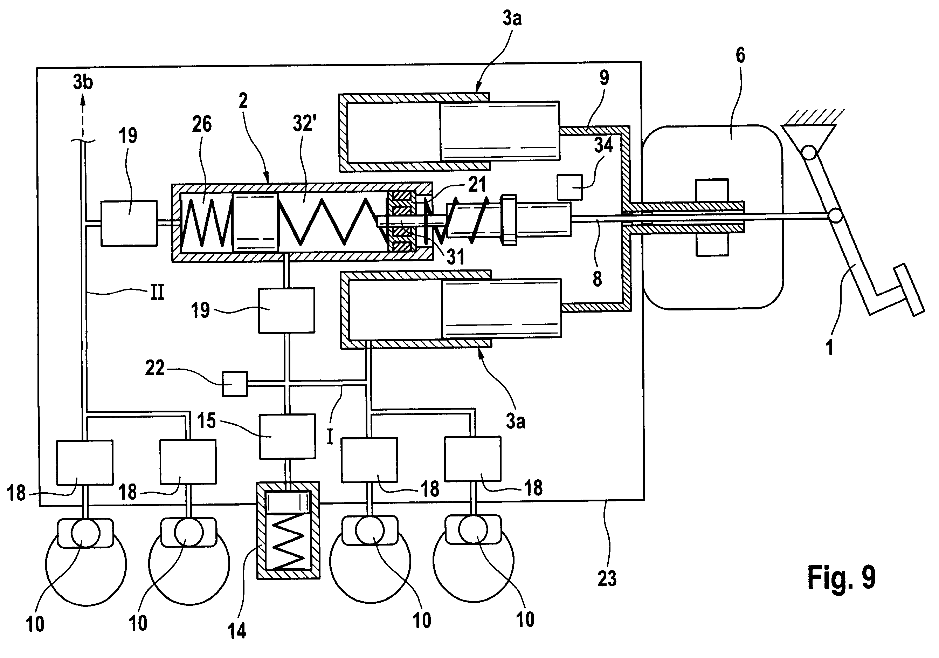

In Fig. 9 ist ein neuntes Ausführungsbeispiel einer erfindungsgemäßen Bremsanlage schematisch dargestellt. Der Wegsimulator 2 ist zweistufig ausgeführt, wobei die erste Stufe entsprechend dem achten Ausführungsbeispiel ausgeführt ist. Wegsimulator 2 umfasst eine Kolbenzylinder-Anordnung mit zwei hintereinander angeordneten hydraulischen Räumen 32' und 26, welche durch einen Schwimmkolben getrennt werden. Mittels des ersten mechanischen Verbindungsmittels 8 wird Kolben 31 betätigt. Jeder der hydraulischen Räume 32', 26 des Wegsimulators 2 ist mit einem Bremskreis I, II mit je zwei Radbremsen 10 verbunden, wobei jeder Radbremse ein stromlos offenes Ventil 18 zur Bremsdruckmodulation vorgeschaltet ist. Je Bremskreis I, II ist ein stromlos offenes Trennventil 19 zur Verhinderung von Druckwechselwirkungen bei einer Bremsdruckmodulation zwischen hydraulischem Raum 32', 26 und Radbremsen 10 angeordnet. Hauptbremszylinder 3 ist als Tandem-Hauptbremszylinder in aufgelöster Bauweise ausgeführt, wobei der Primärkolbenkreis und der Schwimmkolbenkreis jeweils durch zwei Zylinder-Kolben-Anordnungen 3a bzw. 3b gebildet werden, die zur momentenfreien Krafteinleitung durch den Aktuator 6 symmetrisch zur Achse der ersten mechanischen Verbindung 8 angeordnet sind (auf gegenüberliegenden Längsseiten des Wegsimulators 2). An den Primärkolbenkreis des Tandem-Hauptbremszylinders 3 ist Bremskreis I mit zwei Radbremsen 10 und an den Schwimmkolbenkreis Bremskreis II mit zwei Radbremsen 10 angeschlossen. Die beiden Zylinder-Kolben-Anordnungen 3b des Schwimmkolbenkreises sind um 90 Grad gedreht gegenüber den beiden Zylinder-Kolben-Anordnungen 3a des Primärkolbenkreises angeordnet, weshalb nur der Primärkolbenkreis in Fig. 9 dargestellt ist.

Gemäß dem neunten Ausführungsbeispiel wird der Wegsimulator 2 als Fülleinrichtung herangezogen (Prinzip des Volumenverstärkers). Hierzu ist der hydraulische Raum 32' des Wegsimulators 2 mit dem Bremskreis I und damit den entsprechenden Radbremsen 10 verbunden. Weiterhin ist der hydraulische Raum 32' über ein elektrisch steuerbares, z.B. stromlos geschlossenes, Ventil 15 mit einem Niederdruckspeicher 14 verbunden. Die Vorspannung der Feder des Niederdruckspeichers 14 begrenzt den Fülldruck.

Beispielsgemäß ist die Sensorvorrichtung 34, welche den Zustand des Wegsimulators 2 erfasst, als ein Wegsensor 34 zur Sensierung der Position/Verschiebung des Kolbens 31 des Wegsimulators 2 bzw. einer damit verbundenen Komponente ausgebildet. Weiterhin umfasst die Bremsanlage beispielsgemäß einen Drucksensor 22 zur Messung des Druckes des Primärkolbenkreises.

Wie der Fig. 9 entnommen werden kann, sind die hydraulischen Komponenten der Bremsanlage, insbesondere Wegsimulator 2, Hauptbremszylinder 3 sowie die Ventile 15, 18, 19, und optional auch die Sensorvorrichtungen, z.B. Sensorvorrichtungen 34, 22, vorteilhafterweise in einem Gehäuse 23 angeordnet. Gehäuse 23 kann leicht auf der dem Bremspedal 1 abgewandten Seite der Antriebsvorrichtung 6 angeordnet werden. Lediglich die beiden mechanischen Verbindungsmittel 8 und 9 verlaufen so von dem Gehäuse der Antriebsvorrichtung 6 zum Gehäuse 23.

Wie oben bereits beschrieben ist Wegsimulator 2 vorteilhafterweise über ein oder mehrere stromlos offene Trennventile 19 mit den Radbremsen 10 verbunden (siehe Fig. 8 und 9). Bei einer regenerativen Bremsung werden die Multiplexventile 18 geschlossen, um einen Druckaufbau in den Radbremsen 10 zu verhindern. Bei geringen Drucken wird das vom Fahrer im Wegsimulator 2 verdrängte Volumen über Ventil 15 in einen Niederdruckspeicher 14 abgelassen. Bei hohen Drucken wird der Gegendruck im Wegsimulator 2 durch geeignete Ansteuerung des Aktuators 6 simuliert.

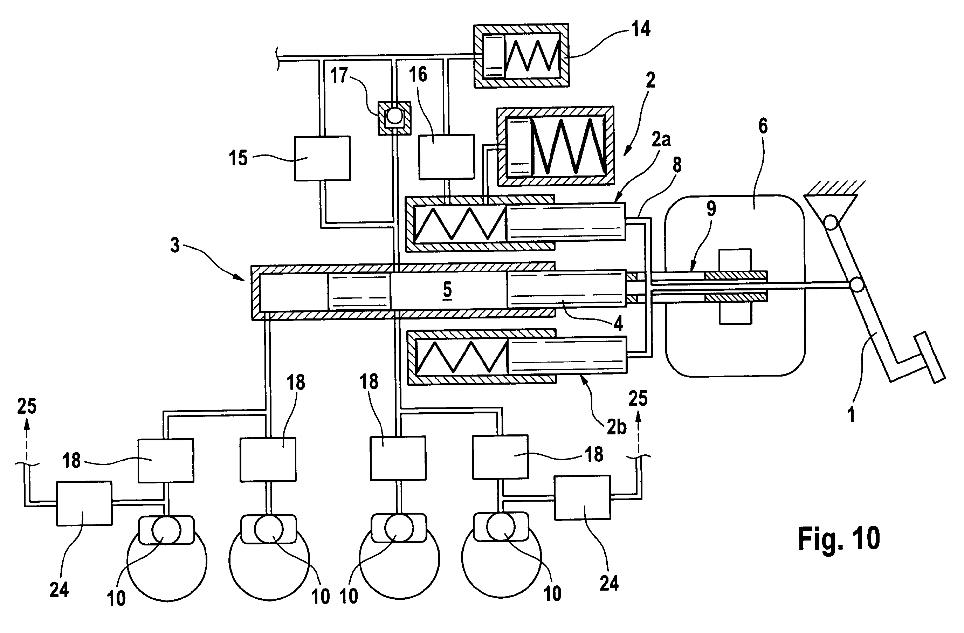

In Fig. 10 ist ein zehntes Ausführungsbeispiel einer erfindungsgemäßen Bremsanlage schematisch dargestellt. Dieses Ausführungsbeispiel entspricht weitgehend dem siebten Ausführungsbeispiel. Neben den stromlos offenen Ventilen 18 in den Bremsleitungen zu den Radbremsen 10, welche zur Bremsdruckmodulation verwendet werden, umfasst die Bremsanlage zusätzlich an ein oder mehreren, z.B. allen, Radbremskreisen elektrisch steuerbare, z.B. stromlos geschlossene, Ventile 24, mittels welcher eine Verbindung zu einem niedrigen Druckniveau 25

(Druckmittelvorratsbehälter (Atmosphärendruck) oder Niederdruckspeicher) herstellbar ist. Beispielsgemäß sind zwei der Radbremsen 10 zusätzlich über Ventile 24 mit einem niedrigen Druckniveau 25 verbindbar, wodurch ein schneller Bremsdruckabbau in diesen Radbremsen möglich wird. Hierdurch steht eine Möglichkeit zur Verfügung, die Geschwindigkeit der Bremsdruckmodulation im Falle eines gleichzeitigen Bedarfs eines Druckabbaus an einer Radbremse und eines Druckaufbaus an einer anderen Radbremse zu verbessern.

Die elektrisch steuerbare elektromechanische Antriebsvorrichtung 6 der Ausführungsbeispiele umfasst z.B. einen Elektromotor und ein Rotations-Translations-Getriebe, z.B. einen Kugelgewindetrieb, zur Umsetzung einer Drehbewegung des Elektromotors in eine Linearbewegung. Vorteilhafterweise ist die Antriebsvorrichtung 6 in einem Gehäuse angeordnet, wobei das erste mechanische Verbindungsmittel 8 sich das Gehäuse hindurch erstrecht.

Vorteilhafterweise umfasst eine erfindungsgemäße Bremsanlage eine Sensorvorrichtung 34 zur Erfassung des Zustandes des Wegsimulators 2, z.B. zur Erfassung der Lage/Position einer Komponente des Wegsimulators (z.B. eines Kolbens 31) oder zur Erfassung der Lage/Position des ersten mechanischen Verbindungsmittels 8, sowie eine Sensorvorrichtung 35 zur Erfassung des Zustandes des Hauptbremszylinders 3, z.B. zur Erfassung der Lage/Position eines Kolbens 4 des Hauptbremszylinders 3 oder der Lage/Position des zweiten mechanischen Verbindungsmittels 9 oder der Lage/Position einer Komponente des Aktuators 6 (z.B. die Rotorlage des Elektromotors oder die Lage einer Spindel eines Rotations-Translations-Getriebes).

Zusätzlich oder alternativ umfasst eine erfindungsgemäße Bremsanlage vorteilhafterweise eine Sensorvorrichtung 22 zur Erfassung eines Druckes in dem Hauptbremszylinder 3 und/oder in einer Radbremse 10 und/oder eine Sensorvorrichtung zur Erfassung eines Druckes in dem Wegsimulator 2.

## Patentansprüche

1. Bremsanlage für Kraftfahrzeuge, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird, und in einer Rückfallbetriebsart betrieben werden kann, in der nur der Betrieb durch den Fahrzeugführer möglich ist, mit
• einem Bremspedal (1),
• einem Wegsimulator (2), welcher über ein Betätigungskräfte übertragendes erstes mechanisches Verbindungsmittel (8) mit dem Bremspedal (1) gekoppelt ist und dem Fahrzeugführer in der Betriebsart "Brake-by-wire" ein angenehmes Bremspedalgefühl vermittelt,
• einem mindestens einen Druckraum (5) und einen Kolben (4) aufweisenden Hauptbremszylinder (3), dessen Druckraum (5) über eine Druckleitung (7) mit zumindest einer hydraulisch betätigbaren Radbremse (10) verbunden oder verbindbar ist, und
• einer elektrisch steuerbaren elektromechanischen Antriebsvorrichtung (6), mit welcher der Kolben (4) des Hauptbremszylinders (3) über ein zweites mechanisches Verbindungsmittel (9) betätigbar ist, und mittels welcher der Hauptbremszylinder (3) in der Betriebsart "Brake-by-wire" betätigt wird,
**dadurch gekennzeichnet, dass** die elektromechanische Antriebsvorrichtung (6) zwischen
• dem Bremspedal (1) einerseits und
• dem Hauptbremszylinder (3) und dem Wegsimulator (2) andererseits
angeordnet ist, wobei sich das erste mechanische Verbindungsmittel (8) von dem Bremspedal (1) durch die Antriebsvorrichtung (6) hindurch zu dem Wegsimulator (2) erstreckt.

2. Bremsanlage nach Anspruch 1, **dadurch gekennzeichnet, dass** eines der mechanischen Verbindungsmittel (9), insbesondere das zweite mechanische Verbindungsmittel, zumindest teilweise als ein Hohlkörper ausgebildet ist, und dass das andere mechanische Verbindungsmittel (8), insbesondere das erste mechanische Verbindungsmittel, zumindest teilweise innerhalb des Hohlkörpers angeordnet ist.

3. Bremsanlage nach Anspruch 1 oder 2, **dadurch gekennzeichnet, dass** der Wegsimulator (2) zumindest eine Kolben-Zylinder-Anordnung umfasst, deren Simulatorkolben (31) mit dem ersten mechanischen Verbindungsmittel (8) verbunden ist.

4. Bremsanlage nach Anspruch 3, **dadurch gekennzeichnet, dass** der Simulatorkolben (31) einen hydraulischen Raum (32') begrenzt.

5. Bremsanlage nach Anspruch 4, **dadurch gekennzeichnet, dass** der hydraulische Raum (32') mit zumindest einer Radbremse (10) verbunden oder verbindbar ist.

6. Bremsanlage nach Anspruch 4 oder 5, **dadurch gekennzeichnet, dass** der hydraulische Raum (32') über ein elektrisch steuerbares Ventil (16) mit einem Niederdruckspeicher (14) verbunden ist.

7. Bremsanlage nach einem der Ansprüche 4 bis 6, **dadurch gekennzeichnet, dass** der Wegsimulator (2) zusätzlich zu dem Simulatorkolben (31) einen weiteren Kolben (21) und eine Feder (20) umfasst, wobei der Simulatorkolben (31) eine kleinere Kolbenwirkfläche (A1) als der weitere Kolben (A2) besitzt, in dem weitere Kolben (21) verlagerbar geführt wird und sich mittels der Feder (20) an dem weitere Kolben (21) abstützt.

8. Bremsanlage nach Anspruch einem der Ansprüche 4 bis 7, **dadurch gekennzeichnet, dass** zwischen dem hydraulischem Raum (32') des Wegsimulators (2) und der Radbremse (10) ein elektrisch steuerbares, stromlos offenes Trennventil (19) angeordnet ist.

9. Bremsanlage nach einem der Ansprüche 4 bis 6, **dadurch gekennzeichnet, dass** der hydraulische Raum (32') über ein Rückschlagventil (17) mit dem Hauptbremszylinder (3) verbunden ist, welcher mit zumindest einer Radbremse (10) verbunden ist.

10. Bremsanlage nach einem der Ansprüche 3 bis 9, **dadurch gekennzeichnet, dass** die Kolben-Zylinder-Anordnung des Wegsimulators (2) und der Hauptbremszylinder (3) im wesentlichen achsparallel nebeneinander angeordnet sind, und dass zumindest das erste oder das zweite mechanische Verbindungsmittel (8, 9) ein Kraftumlenkmittel umfasst.

11. Bremsanlage nach einem der Ansprüche 1 bis 10, **dadurch gekennzeichnet, dass** das erste (8) und das zweite (9) mechanische Verbindungsmittel derart ausgebildet sind (11, 12), dass eine Betätigung des Hauptbremszylinders (3) in Bremsbetätigungsrichtung mittels des ersten mechanische Verbindungsmittels (8) durch einen mechanischen Kontakt (12) zwischen dem ersten mechanischen Verbindungsmittel (8) und dem Hauptbremszylinders (3) oder dem ersten mechanischen Verbindungsmittel (8, 11) und dem zweitem mechanischen Verbindungsmittel (9) möglich ist.

12. Bremsanlage nach einem der Ansprüche 1 bis 11, **dadurch gekennzeichnet, dass** diese zumindest eine Sensorvorrichtung (34, 35) umfasst, mittels welcher die relative Lage von erstem (8) zu zweitem (9) mechanischen Verbindungsmittels bestimmt wird.

13. Bremsanlage nach einem der Ansprüche 1 bis 12, **dadurch gekennzeichnet, dass** der Druckraum (5) des Hauptbremszylinders (3) über ein elektrisch steuerbares Ventil (15) mit einem Druckmittelbehälter (14) verbindbar ist.

14. Bremsanlage nach einem der Ansprüche 1 bis 13, **dadurch gekennzeichnet, dass** das zweite mechanische Verbindungsmittel (9) derart, insbesondere zweiteilig, ausgebildet ist, oder die Kopplung zwischen dem Kolben (4) des Hauptbremszylinders (3) und dem zweitem mechanischem Verbindungmittel (9) derart, insbesondere lösbar, ausgeführt ist, dass der Kolben (4) des Hauptbremszylinders (3) mittels des ersten mechanischen Verbindungsmittels (8) betätigbar ist, auch wenn die Antriebsvorrichtung (6) blockiert ist.

15. Bremsanlage nach einem der Ansprüche 1 bis 14, **dadurch gekennzeichnet, dass** das erste mechanische Verbindungsmittel (8) und das zweite mechanische Verbindungsmittel (9) derart ausgeführt sind, dass das zweite mechanische Verbindungsmittel (9) durch die Antriebsvorrichtung (6) über einen vorgegebenen Weg (13) in Bremsbetätigungsrichtung relativ zu dem ersten mechanische Verbindungsmittel (8) verstellt werden kann, ohne dass eine Mitnahme oder Rückwirkung auf das Bremspedal (1) erfolgt.

## Claims

1. Braking system for motor vehicles, which can be activated in a brake-by-wire operating mode both by the vehicle driver and independently of the vehicle driver, is operated preferably in the brake-by-wire mode and can be operated in a fallback mode in which only operation by the vehicle driver is possible, comprising
• a brake pedal (1),
• a travel simulator (2) which is coupled via an actuating-forces transmitting first mechanical connecting means (8) to the brake pedal (1) and communicates an agreeable brake pedal feel to the vehicle driver in the brake-by-wire operating mode,
• a brake master cylinder (3) having at least one pressure chamber (5) and one piston (4), the pressure chamber (5) being connected or connectable via a pressure line (7) to at least one hydraulically actuable wheel brake (10), and
• an electrically controllable electromechanical drive device (6) with which the piston (4) of the brake master cylinder (3) is actuable via a second mechanical connecting means (9), and by means of which the brake master cylinder (3) is actuated in the brake-by-wire operating mode,
**characterized in that** the electromechanical drive device (6) is arranged between
• the brake pedal (1) on one side and
• the brake master cylinder (3) and the travel simulator (2) on the other side,
the first mechanical connecting means (8) extending from the brake pedal (1) through the drive device (6) to the travel simulator (2).

2. Braking system according to Claim 1, **characterized in that** one of the mechanical connecting means (9), in particular the second mechanical connecting means, is configured at least partially as a hollow body, and **in that** the other mechanical connecting means (8), in particular the first mechanical connecting means, is arranged at least partially inside the hollow body.

3. Braking system according to Claim 1 or 2, **characterized in that** the travel simulator (2) includes at least one piston/cylinder arrangement the simulator piston (31) of which is connected to the first mechanical connecting means (8).

4. Braking system according to Claim 3, **characterized in that** the simulator piston (31) delimits a hydraulic chamber (32').

5. Braking system according to Claim 4, **characterized in that** the hydraulic chamber (32') is connected or connectable to at least one wheel brake (10).

6. Braking system according to Claim 4 or 5, **characterized in that** the hydraulic chamber (32') is connected via an electrically controllable valve (16) to a low pressure accumulator (14).

7. Braking system according to any one of Claims 4 to 6, **characterized in that** the travel simulator (2) includes, in addition to the simulator piston (31), a further piston (21) and a spring (20), the simulator piston (31) having a smaller effective piston area (A1) than the further piston (A2), being guided displaceably in the further piston (21) and bearing against the further piston (21) by means of the spring (20).

8. Braking system according to any one of Claims 4 to 7, **characterized in that** an electrically controllable, open when currentless, isolating valve (19) is arranged between the hydraulic chamber (32') of the travel simulator (2) and the wheel brake (10).

9. Braking system according to any one of Claims 4 to 6, **characterized in that** the hydraulic chamber (32') is connected via a nonreturn valve (17) to the brake master cylinder (3) which is connected to at least one wheel brake (10).

10. Braking system according to any one of Claims 3 to 9, **characterized in that** the piston/cylinder arrangement of the travel simulator (2) and the brake master cylinder (3) are arranged substantially axis-parallel side-by-side, and **in that** at least the first or the second mechanical connecting means (8, 9) includes a force deflecting means.

11. Braking system according to any one of Claims 1 to 10, **characterized in that** the first (8) and the second (9) mechanical connecting means are configured in such a way (11, 12) that actuation of the brake master cylinder (3) in the brake actuation direction is possible by means of the first mechanical connecting means (8) through a mechanical contact (12) between the first mechanical connecting means (8) and the brake master cylinder (3), or between the first mechanical connecting means (8, 11) and the second mechanical connecting means (9).

12. Braking system according to any one of Claims 1 to 11, **characterized in that** it includes at least one sensor device (34, 35) by means of which the relative position of the first (8) with respect to the second (9) mechanical connecting means is determined.

13. Braking system according to any one of Claims 1 to 12, **characterized in that** the pressure chamber (5) of the brake master cylinder (3) is connectable via an electrically controllable valve (15) to a pressure medium container (14).

14. Braking system according to any one of Claims 1 to 13, **characterized in that** the second mechanical connecting means (9) is configured in such a way, in particular in two parts, or the coupling between the piston (4) of the brake master cylinder (3) and the second mechanical connecting means (9) is configured in such a way, in particular releasably, that the piston (4) of the brake master cylinder (3) is actuable by means of the first mechanical connecting means (8) even if the drive device (6) is blocked.

15. Braking system according to any one of Claims 1 to 14, **characterized in that** the first mechanical connecting means (8) and the second mechanical connecting means (9) are configured in such a way that the second mechanical connecting means (9) can be displaced relative to the first mechanical connecting means (8) by the drive device (6) over a predetermined distance (13) in the brake actuation direction without causing entrainment of and/or reaction on the brake pedal (1).

## Revendications

1. Système de freinage pour véhicules automobiles, ledit système pouvant être commandé, dans un mode de fonctionnement de type à commande électronique, tant par le conducteur du véhicule qu'indépendamment du conducteur du véhicule, ledit système étant de préférence entraîné dans un mode de fonctionnement de type à commande électronique et pouvant être entraîné dans un mode de fonctionnement de relâchement dans lequel seul l'actionnement par le conducteur du véhicule est possible ; avec :
- une pédale de frein (1) ;
- un simulateur de course (2) couplé à la pédale de frein (1) via un premier moyen de liaison mécanique (8) transmettant les forces d'actionnement et donnant au conducteur du véhicule une sensation de pédale de frein agréable dans le mode de fonctionnement à commande électronique ;
- un maître-cylindre de frein (3) comportant au moins une chambre de pression (5) et un piston (4), la chambre de pression (5) dudit maître-cylindre de frein étant reliée ou pouvant être reliée à au moins un frein de roue (10) pouvant être actionné hydrauliquement via une conduite de pression (7) ; et
- un dispositif d'entraînement électromécanique (6) à commande électrique à l'aide duquel le piston (4) du maître-cylindre de frein (3) peut être actionné via un deuxième moyen de liaison mécanique (9) et à l'aide duquel le maître-cylindre de frein (3) est actionné dans le mode de fonctionnement à commande électronique ;
**caractérisé en ce que** le dispositif d'entraînement électromécanique (6) est disposé entre :
- la pédale de frein (1) d'une part ; et
- le maître-cylindre de frein (3) et le simulateur de course (2) d'autre part, le premier moyen de liaison mécanique (8) s'étendant de la pédale de frein (1) jusqu'au simulateur de course (2) en passant au travers du dispositif d'entraînement (6).

2. Système de freinage selon la revendication 1, **caractérisé en ce qu'**un des moyens de liaison mécanique (9), notamment le deuxième moyen de liaison mécanique est réalisé au moins en partie sous la forme d'un corps creux et que l'autre moyen de liaison mécanique (8), notamment le premier moyen de liaison mécanique, est disposé au moins en partie à l'intérieur du corps creux.

3. Système de freinage selon la revendication 1 ou 2, **caractérisé en ce que** le simulateur de course (2) comprend au moins un agencement piston-cylindre dont le piston de simulateur (31) est relié au premier moyen de liaison mécanique (8).

4. Système de freinage selon la revendication 3, **caractérisé en ce que** le piston de simulateur (31) délimite une chambre hydraulique (32').

5. Système de freinage selon la revendication 4, **caractérisé en ce que** la chambre hydraulique (32') est reliée ou peut être reliée à au moins un frein de roue (10).

6. Système de freinage selon la revendication 4 ou 5, **caractérisé en ce que** la chambre hydraulique (32') est reliée à un accumulateur de basse pression (14) via une soupape (16) à commande électrique.

7. Système de freinage selon l'une quelconque des revendications 4 à 6, **caractérisé en ce que** le simulateur de course (2) comprend en sus du piston de simulateur (31) un piston (21) supplémentaire et un ressort (20), le piston de simulateur (31) possédant une surface active de piston (A1) plus petite que celle du piston (A2) supplémentaire, le piston de simulateur étant guidé de façon mobile dans le piston (21) supplémentaire et s'appuyant contre le piston (21) supplémentaire à l'aide du ressort (20).

8. Système de freinage selon l'une quelconque des revendications 4 à 7, **caractérisé en ce qu'**une soupape de séparation (19) ouverte sans courant et à commande électrique est disposée entre la chambre hydraulique (32') du simulateur de course (2) et le frein de roue (10).

9. Système de freinage selon l'une quelconque des revendications 4 à 6, **caractérisé en ce que** la chambre hydraulique (32') est reliée au maître-cylindre de frein (3) via une soupape de retenue (17), elle-même reliée à au moins un frein de roue (10).

10. Système de freinage selon l'une quelconque des revendications 3 à 9, **caractérisé en ce que** l'agencement piston-cylindre du simulateur de course (2) et du maître-cylindre de frein (3) sont disposés côte à côte pour l'essentiel parallèlement à l'axe et **en ce qu'**au moins le premier ou le deuxième moyen de liaison mécanique (8, 9) comprend un moyen de déviation de force.

11. Système de freinage selon l'une quelconque des revendications 1 à 10, **caractérisé en ce que** le premier (8) et le deuxième (9) moyen de liaison mécanique sont réalisés de telle sorte (11, 12) qu'ils permettent l'actionnement du maître-cylindre de frein (3) dans la direction d'actionnement de frein à l'aide du premier moyen de liaison mécanique (8), par le biais d'un contact (12) mécanique entre le premier moyen de liaison mécanique (8) et le maître-cylindre de frein (3) ou le premier moyen de liaison mécanique (8, 11) et le deuxième moyen de liaison mécanique (9).

12. Système de freinage selon l'une quelconque des revendications 1 à 11, **caractérisé en ce que** celui-ci comprend au moins un dispositif de détection (34, 35) à l'aide duquel la position relative du premier (8) par rapport au deuxième (9) moyen de liaison mécanique est définie.

13. Système de freinage selon l'une quelconque des revendications 1 à 12, **caractérisé en ce que** la chambre de pression (5) du maître-cylindre de frein (3) peut être reliée à un bac de moyen de pression (14) via une soupape (15) à commande électrique.

14. Système de freinage selon l'une quelconque des revendications 1 à 13, **caractérisé en ce que** le deuxième moyen de liaison mécanique (9) est réalisé de telle sorte, notamment en deux parties, ou que le couplage entre le piston (4) du maître-cylindre de frein (3) et le deuxième moyen de liaison mécanique (9) est réalisé de telle sorte, notamment de façon amovible, que le piston (4) du maître-cylindre de frein (3) peut être actionné à l'aide du premier moyen de liaison mécanique (8), également lorsque le dispositif d'entraînement (6) est bloqué.

15. Système de freinage selon l'une quelconque des revendications 1 à 14, **caractérisé en ce que** le premier moyen de liaison mécanique (8) et le deuxième moyen de liaison mécanique (9) sont réalisés de telle sorte que le deuxième moyen de liaison mécanique (9) peut être déplacé par le dispositif d'entraînement (6) sur une course (13) prédéfinie dans la direction d'actionnement de frein, par rapport au premier moyen de liaison mécanique (8), sans qu'un engrenage ou une rétroaction se produisent sur la pédale de frein (1).
